(19) Europäisches Patentamt
European Patent Office
Office européen des brevets

(11) Veröffentlichungsnummer: **0 444 509 A2**

# (12) EUROPÄISCHE PATENTANMELDUNG

(21) Anmeldenummer: **91102408.1**

(22) Anmeldetag: **20.02.91**

(51) Int. Cl.5: **C08F 246/00**, C08F 212/14, C08F 220/60, C08F 220/36, C09D 157/04, C04B 24/26, C08F 226/02, D21H 17/34, C14C 9/00

(30) Priorität: **27.02.90 DE 4006098**

(43) Veröffentlichungstag der Anmeldung: **04.09.91 Patentblatt 91/36**

(84) Benannte Vertragsstaaten: **AT BE CH DE ES FR GB GR IT LI NL SE**

(71) Anmelder: **HOECHST AKTIENGESELLSCHAFT**
**Postfach 80 03 20**
**W-6230 Frankfurt am Main 80(DE)**

(72) Erfinder: **Huth, Hans-Ullrich, Dr.**
**Finkenweg 8**
**W-6073 Egelsbach(DE)**
Erfinder: **Angelmayer, Karl-Hans, Dipl.-Ing.**
**Steinheimer Strasse 53**
**W-6228 Eltville(DE)**

## (54) Fluorurethangruppen enthaltende Polymerisate aus ethylenisch ungesättigten Monomeren, Verfahren zu ihrer Herstellung und ihre Verwendung.

(57) Fluorurethangruppen enthaltende Polymerisate aus ethylenisch ungesättigten Monomeren, Verfahren zu ihrer Herstellung und ihre Verwendung

Polymerisate auf der Basis von ethylenisch ungesättigten Monomeren, die mindestens 0,1 Gew.-% Monomereinheiten aus speziellen ethylenisch ungesättigten, fluorhaltigen und polymerisationsfähigen bzw. copolymerisationsfähigen Urethanderivaten (siehe Formel I) enthalten.

Verfahren zur Herstellung der Polymerisate bzw. Copolymerisate aus den sie aufbauenden Monomeren durch radikalisch initiierte Polymerisation bzw. Copolymerisation, vorzugsweise nach einer Methode der Emulsionspolymerisation.

Verwendung der Polymerisate als Ausgangsmaterial für die Herstellung von Filmen, Folien, Fasern, Klebstoffen, Lacken, Pressmassen, Formkörpern, als Verdicker in wäßrigen Zubereitungen, als Imprägniermittel, Bindemittel und Beschichtungsmittel für verschiedene technische bzw. chemisch-technische Anwendungsgebiete.

EP 0 444 509 A2

Die Erfindung betrifft Polymerisate auf der Basis von ethylenisch ungesättigten Monomeren, die Einheiten aus ethylenisch ungesättigten, fluorhaltigen Urethanderivaten enthalten, Verfahren zu ihrer Herstellung durch radikalisch initiierte Polymerisation bzw. Copolymerisation und ihre Verwendung als Beschichtungsmittel, Klebstoffe, geformte Kunststoffe sowie als Bindemittel und Hilfsmittel in chemisch-technischen Zubereitungen.

Aus der EP-PS 24908 ist die Herstellung von ethylenisch ungesättigten, fluorhaltigen Urethanen, deren Urethangruppe am N-Atom einen Fluoralkylrest besitzen kann, bekannt. Polymere aus diesen Urethanen sollen in ungiftigen Lösungsmitteln löslich und als schmutzabweisende Appretur mit guter Haftung auf Textilien und Leder und hoher Erweichungstemperatur verwendbar sein.

Aus der US-PS 4540805 ist die Herstellung von ethylenisch ungesättigten, fluorhaltigen Urethanen, deren Urethangruppe am Carboxyrest durch fluorierte Thioätherreste substituiert ist, bekannt. Die Verbindungen können durch Polymerisation in Substanz, in Lösung oder in Emulsion in Polymere übergeführt werden, die u.a. zur wasser- und ölabweisenden Beschichtung von Textilien verwendbar sein sollen.

Aus der EP-PS 225826 ist die Herstellung von ethylenisch ungesättigten, fluorhaltigen Bisurethanen, die durch stufenweise Umsetzung von zunächst einer Isocyanatgruppe des Toluylendiisocyanats mit einem Fluoralkanol und danach der anderen Isocyanatgruppe mit einem Hydroxyalkyl(meth-) acrylat erhalten werden können, bekannt. Das Verfahren hat den Nachteil, daß bereits in der ersten Stufe bei bis zu 40% des Toluylendiisocyanats beide Isocyanatgruppen mit Fluoralkanol reagieren, was zu erheblichen Verlusten führt und kostspielige Trennoperationen erforderlich macht. Durch Lösungspolymerisation hergestellte Homo- und Copolymere der fluorhaltigen Bisurethane sollen zur Herstellung von wasser- und ölabweisenden Beschichtungen auf Textilien und Leder verwendet werden können.

Wie sich in der Praxis gezeigt hat, sind die bisher bekannt gewordenen ethylenisch ungesättigten, fluorhaltigen Urethane und deren Polymerisate bzw. Copolymerisate mit einer Reihe von Nachteilen behaftet, wie z.B. schwierig und aufwendig zugänglichen Ausgangskomponenten, unbefriedigenden Ausbeuten bei den Herstellungsverfahren, Erfordernis von aufwendigen Reinigungsoperationen zur Eliminierung von Nebenprodukten, unbefriedigenden Löslichkeiten bei der Verwendung der Monomeren als Comonomere, unbefriedigendes Homo- und/oder Copolymerisationsverhalten sowie unzureichendes Eigenschaftsspektrum von Polymerisaten und/oder Copolymerisaten.

Der Erfindung lag somit die Aufgabe zugrunde, unter Überwindung der vorgenannten Schwierigkeiten monomere, ethylenisch ungesättige, fluorhaltige Urethane verfügbar zu machen, die einfach und wirtschaftlich herstellbar sind, sich problemlos polymerisieren und copolymerisieren lassen und das Eigenschaftsspektrum der Polymerisate eine breite und unproblematische Verwendbarkeit ermöglicht.

Es wurden nun überraschenderweise ethylenisch ungesättigte, fluorhaltige Urethanderivate gefunden, deren Urethangruppe an ihrem Carboxyrest durch einen fluorierten organischen Rest und an ihrem N-Atom durch einen nichtfluorierten, ethylenisch ungesättigten organischen Rest substituiert ist, welche die gestellten Anforderungen erfüllen können. Die erfindungsgemäß verwendeten Urethanderivate sind unter Normalbedingungen flüssig oder fest, besitzen gute Löslichkeiten in organischen Lösungsmitteln und lassen sich vorteilhaft als Monomere zur Herstellung von Polymerisaten und/oder Copolymerisaten, verwenden.

Gegenstand der Erfindung sind daher Polymerisate auf der Basis von ethylenisch ungesättigten Monomeren, die Einheiten aus ethylenisch ungesättigten, fluorhaltigen Urethanderivaten enthalten und durch Emulsions-, Suspensions-, Perl-, Lösungs-, Block- oder Fällungs-Polymerisation bzw. -Copolymerisation hergestellt worden sind, dadurch gekennzeichnet, daß sie mindestens 0,1 Gew.-%, bezogen auf das Polymerisat bzw. Copolymerisat, Monomereinheiten aus ethylenisch ungesättigten, fluorhaltigen Urethanderivaten der Formel I,

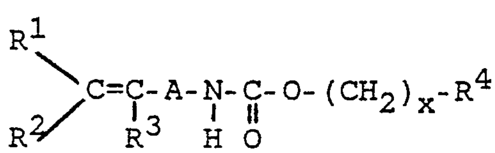

(I)

worin $R^1$ bis $R^4$, A und der Zahlenindex x folgendes bedeuten:

| | |
|---|---|
| $R^1$, $R^2$, $R^3$, | die gleich oder verschieden sein können, = H, $-CH_3$, vorzugsweise $R^1$, $R^2$ = H und $R^3$ = $-CH_3$, |
| x | = 1 oder 2 |
| A | = $(CH_2)_y-$ , y = 1 bis 6, tert.-Butylphenylen $-[C_6H_3-C(CH_3)_3]-$ oder $-C_6H_4C(CH_3)_2-$ oder |

$$-(CH_2)_k-(\underset{\underset{O}{\|}}{C})_m-(Z-CH_2-\underset{\underset{R^5}{|}}{CH})_n-(O-\underset{\underset{O}{\|}}{C}-\underset{\underset{H}{|}}{N}-B)_p-$$

| | |
|---|---|
| Z | = Sauerstoff oder NH, vorzugsweise Sauerstoff, |
| $R^5$ | = H, $-CH_3$, $-C_2H_5$, |
| B | = $(C_6-C_{16})$-Arylen, das $(C_1-C_{10})$-Alkylreste enthalten kann, vorzugsweise Phenylen, Toluylen, tert.-Butylphenylen, Naphthylen, $(C_2-C_{12})$-Alkylen oder $(C_6-C_{10})$-Cycloalkylen, |
| k, m, p | = 0 oder 1, vorzugsweise m = 1, |
| n | = 1 bis 5, vorzugsweise 1, |
| $R^4$ | = $-(C_2F_4)_qH$, $-(CF_2)_rH$, $-(C_rF_{2r+1})$, $-C_rF_{2r}-O-R^6$, |
| q | = 1 bis 6, vorzugsweise 1 bis 3, |
| r | = 1 bis 9, vorzugsweise 1 bis 6, |
| $R^6$ | = $(C_1-C_{12})$-Alkyl, das teilweise oder vollständig durch Fluoratome substituiert sein kann, $(C_6-C_{12})$-Aryl oder $(C_7-C_{12})$-Alkaryl, die teilweise oder vollständig durch Fluoratome substituiert sein können, |

enthalten, oder wäßrige Dispersionen dieser Polymerisate bzw. Copolymerisate.

Bevorzugt enthalten die Polymerisate erfindungsgemäß 0,2 bis 100 Gew.-% Monomereinheiten aus Verbindungen der Formel I und werden insbesondere durch Perl- oder Emulsionspolymerisation hergestellt.

Erfindungsgemäß beträgt der Fluorgehalt der Polymerisate bzw. Copolymerisate vorzugsweise mindestens 0,1 Gew.-%, bezogen auf das Polymerisat bzw. Copolymerisat.

Insbesondere beträgt der Fluorgehalt 0,1 bis 10 Gew.-%, bezogen auf das Polymerisat bzw. Copolymerisat.

Erfindungsgemäße Polymerisate können außer den Monomereinheiten der Formel I bis zu 99,9 Gew.-% bzw. bis zu 99,8 Gew.-%, vorzugsweise 1 bis 60, insbesondere 4 bis 20 Gew.-%, bezogen auf das Polymerisat, Comonomereinheiten aus der Gruppe üblicher copolymerisationsfähiger Vinylester, Methacrylester, Acrylester, Vinylaromaten, Acrylnitril, Methacrylnitril, Ethylen, Vinylidenchlorid, Vinylchlorid, Mono- oder Di-Ester von Crotonsäure, Maleinsäure, Fumarsäure, Itakonsäure mit $(C_1-C_{22})$-Alkoholen enthalten.

Erfindungsgemäß können die Polymerisate ferner 0 bis 99,9 Gew.-% bzw. bis 99,8 Gew.-%, vorzugsweise 0 bis 50, insbesondere 1 bis 10 Gew.-%, bezogen auf das Polymerisat, Comonomereinheiten aus copolymerisationsfähigen ethylenisch ungesättigten Monomeren mit funktionellen Resten aus der Gruppe -OH, $-SO_3H$ bzw. deren Salzen, $-N(R^5)_2$, $-N(R^6)_3$, -COOH bzw. deren Salzen, $-CON(R^7)_2$, $-N(R^5)-CO-NR^5R^6$, $-Si(OR^6)_3$, -PO(OH) oder Epoxid, wobei $R^5$ = $(C_1-C_6)$-Alkyl oder H, $R^6$ = $(C_1-C_{18})$-Alkyl, $(C_7-C_{22})$-Aralkyl, Glycidyl, H, $(C_1-C_4)$-Hydroxyalkyl, $(C_1-C_6)$-Carboxyalkyl und $R^7$ = $(C_1-C_6)$-Alkyl, H, Methylol, $(C_1-C_4)$-Alkoxy, $(C_2-C_6)$-Alkylsulfonsäure bzw. deren Salze bedeutet, enthalten.

Bei Polymerisaten, die in Form von wäßrigen Dispersionen vorliegen, liegt die minimale Filmbildungstemperatur (MFT) der Dispersion vorzugsweise im Bereich von 0 bis 80 °C.

Die meisten der als Monomere bzw. Comonomere erfindungsgemäß eingesetzten fluorhaltigen Urethanderivate der Formel I sowie deren Herstellung sind Gegenstand der am gleichen Tag eingereichten Patentanmeldung HOE 90/F 061 (Az. P 4006097.7), auf die hiermit Bezug genommen wird.

Die fluorhaltigen Urethanderivate der Formel I können erfindungsgemäß homopolymerisiert oder copolymerisiert werden. Bevorzugt ist die Copolymerisation.

Weiterer Gegenstand der Erfindung sind daher auch Verfahren zur Herstellung erfindungsgemäßer Homo- und Copolymerisate durch radikalisch initiierte Emulsions-, Suspensions-, Perl-, Lösungs-, Block- oder Fällungs-Polymerisation bzw. -Copolymerisation der entsprechenden Ausgangsmonomeren unter Anwendung üblicher Polymerisationsmethoden.

Besonders bevorzugte monomere fluorhaltige Urethanderivate der Formel I sind solche, bei denen in Formel I $R^1$, $R^2$ = H, $R^3$ = H, $-CH_3$, oder $R^1$, $R^3$ = H, R2 = $-CH_3$, und Z = Sauerstoff bedeutet.

Als comonomere Ausgangskomponenten zur Herstellung erfindungsgemäßer Copolymerisate kommen vorzugsweise z.B. die nachstehend aufgeführten Monomeren infrage:

Ethylenisch ungesättigte $C_3-C_5$-Mono- oder Dicarbonsäuren oder deren Halbester mit aliphatischen $(C_1-C_8)$-Alkoholen oder Gemische dieser Monomeren, vorzugsweise Methacrylsäure, Acrylsäure, Crotonsäure, Maleinsäure, Fumarsäure, Itakonsäure, Maleinsäuremonoalkylester, Hydroxyalkylester oder Polyalkylenglykolester von $\alpha,\beta$-ethylenisch ungesättigten Carbonsäuren bzw. deren Monoalkyläther, wie z.B. Hydroxyethylacrylat, Hydroxyethylmethacrylat, Hydroxyethylcrotonat, Hydroxypropylacrylat, Hydroxypropylmethacrylat, Hydroxypropylcrotonat, Hydroxybutylacrylat, Hydroxybutylmethacrylat, Hydroxybutylcrotonat, Polyethylenglykolacrylat, -methacrylat u. -crotonat, Polypropylenglykolacrylat, -methacrylat u. -crotonat mit jeweils 2-50 Polyalkylenglykoleinheiten, außerdem die entsprechenden $C_1-C_4$-Alkylether oder deren Gemische, sowie

α,ß-ethylenisch ungesättigte Amide, wie z.B. Acrylamid, Methacrylamid, N-Methylacrylamid, N-Methylmethacrylamid, N,N-Dimethylacrylamid, N,N-Dimethylmethacrylamid, N-Methylolacrylamid, N-Methylolmethacrylamid, N-Butoxymethylacrylamid, N-Butoxymethylmethacrylamid, N-tert.-Butylmethacrylamid, N-Cyclohexylmethacrylamid, N-Benzylmethacrylamid oder deren Gemische, außerdem α,ß-ethylenisch ungesättigte Sulfon- oder Phosphonsäuren, wie z.B. Vinylsulfonsäure, Acrylamidomethylpropansulfonsäure, Styrolsulfonsäure, (3-Sulfopropyl)methacrylsäureester, Vinylphosphonsäure, Acrylamidomethylpropanphosphonsäure oder ihre Alkali- und/oder Ammoniumsalze oder deren Gemische sowie α,ß-ethylenisch ungesättigte Epoxide, wie z.B. Glycidylacrylat, Glycidylmethacrylat, ferner α,ß-ethylenisch ungesättigte Silane, wie z.B. Vinyltrimethoxysilan, Vinyltriethoxysilan, Methacryloxypropyltrimethoxysilan, Methacryloxypropyltris (methoxyethoxy)silan, Vinyltris(methoxyethoxy)silan, Vinyltriacetoxysilan sowie ungesättige Urethane, wie z.B. N-Methylcarbamidoethylmethacrylat, N-Butylcarbamidoisopropylmethacrylat, N-Oktadecylcarbamidoethylacrylat, N-Phenylcarbamidoethylmethacrylat, N-Cyclohexylcarbamidoethylacrylat, ferner ungesättigte Harnstoffe, wie z.B. 2-Methacryloylethylharnstoff, 2-Oktylmethacryloylethylharnstoff, 2-Phenylmethacryloylethylharnstoff, außerdem α,ß-ethylenisch ungesättigte, salzartige wasserlösliche Monomere mit Alkylsulfonium, -phosphonium und vorzugsweise -ammoniumgruppen, wie z.B. Trimethylammoniumethyl (meth-)acrylatchlorid, ß-Acetamidodiethyl-aminoethyl(meth-)acrylat-chlorid, (Meth-)Acrylamidopropyltrimethylammoniumchlorid, (Meth-)Acrylamidoethyltrimethylammonium-bromid, Trimethylammoniumneopentyl(meth-)acrylat-chlorid, Diallyl-dimethylammoniumchlorid, Diallyl-butylmethylammoniumbromid oder deren Gemische, sowie α,ß-ethylenisch ungesättigte primäre, sekundäre oder tert.-Amine, wie z.B. Dimethylaminoethylacrylamid, Dimethylaminoneopentylacrylat, Dimethylaminoneopentylmethacrylat, Dimethylaminopropylacrylat, Dimethylaminopropylmethacrylat, Dimethylaminopropylacrylamid, Dimethylaminopropylmethacrylamid, 2-N-Morpholinoethylacrylat, 2-N-Morpholinoethylmethacrylat, tert.-Butylaminoethylacrylat, tert.-Butylaminoethylmethacrylat, 4-Acrylamido-2,2,6,6-tetramethylpiperidin, 4-Methacrylamido-2,2,6,6-tetramethylpiperidin, Ethylaminoethylacrylat, Ethylaminoethylmethacrylat, Aminoethylacrylat, Aminoethylmethacrylat, ferner α,ß-ethylenisch ungesättigte Monomere, die Fluoratome enthalten, vorzugsweise Acryl- oder Methacrylester mit teil- oder perfluorierten ($C_1$-$C_8$)-Alkanolen, sofern sie nicht unter die Verbindungen der Formel I fallen, wie z.B. Methacrylsäure-2,2,3,4,4,4-hexafluorbutylester, Methacrylsäure-2,2,3,3-tetrafluorpropylester, oder fluorierte Alkylene, wie z.B. Perfluorhexylethylen.

Außer diesen Monomeren können bis zu 5 Gew.-%, bezogen auf die Gesamtmonomerenmenge, zur Vernetzung fähige, mehrfach ungesättigte oder mehrfachfunktionelle Verbindungen, wie z.B. Divinylbenzol, Diallylphthalat, Butandioldiacrylat, Triethylenglykoldimethacrylat, Allylmethacrylat, Bisphenol-A-diethylenglykoldimethacrylat, Triallylcyanurat, Methylen-bis-methacrylamid, oder bis zu 5 Gew.-% Molekulargewichtsregler, wie z.B. Dodecylmerkaptan, Tetrachlorkohlenstoff, Bromtrichlormethan oder Tetrakismerkaptoacetylpentaerythrit, bei der Polymerisation eingesetzt werden.

Ein aus erfindungsgemäßen Ausgangskomponenten aufgebautes Copolymerisat kann z.B. durch übliche, radikalisch initiierte Lösungscopolymerisation in üblichen Lösungsmitteln, oder auch in Form einer wäßrigen Dispersion durch übliche Emulsionscopolymerisation hergestellt werden. Bei einer Herstellung durch Emulsionscopolymerisation liegt der Feststoffgehalt der resultierenden wäßrigen Dispersion zwischen 10 und 75 Gew.-%, vorzugsweise 30 bis 60 Gew.-%. Bevorzugtes Herstellungverfahren ist die Emulsionscopolymerisation.

Bei der Herstellung durch Lösungscopolymerisation können die üblichen Verfahren zur Copolymerisation in organischen Medien mit radikalischen Initiatoren angewendet werden.

Im Fall der Emulsionscopolymerisation kann ebenfalls nach üblichen Methoden verfahren werden, d.h. es können die üblichen ionogenen und nichtionogenen Emulgatoren zur Emulgierung der Monomeren und zur Stabilisierung der Latices eingesetzt werden. Als anionische Emulgatoren kommen z.B. infrage: Alkylsulfate, Alkylarylsulfate, Alkylarylsulfonate, Alkali- und/oder Ammoniumsalze von Alkyl- bzw. Alkylarylglykolethersulfaten; als nichtionische Emulgatoren kommen infrage: Tensioaktive Umsetzungsprodukte von aliphatischen, cycloaliphatischen, araliphatischen und aromatischen Carbonsäuren, Alkoholen, Phenolen und Aminen mit Epoxiden, wie z.B. Ethylenoxid, sowie Blockcopolymerisate verschiedener Epoxide, wie z.B. Ethylenoxid und Propylenoxid. Eine weitere wichtige Emulgatorklasse sind primäre, sekundäre und tertiäre Fettamine in Kombination mit organischen oder anorganischen Säuren und quaternäre Alkylammoniumverbindungen. Es lassen sich auch amphotere Tenside mit zwitterionischer Struktur, wie z.B. Alkylamidopropylbetaine, einsetzen. Die genannten Emulgatoren können sowohl einzeln als auch in Kombination mit anderen aus den oben genannten Gruppen verwendet werden, jedoch nur, wenn sie miteinander verträglich sind, was sich bei kationischen und anionischen Verbindungen meist ausschließt.

Im Falle, daß das Copolymerisat überwiegend basisch oder kationisch ist, d.h., daß statt der ethylenisch ungesättigten Carbonsäure(n) monomere, primäre, sekundäre oder tert.-Amine oder quaternäre Alkylammoniumverbindungen verwendet wurden, werden als Emulgatoren vorwiegend die oben erwähnten, nichtionischen Verbindungen und/oder kationische Tenside, wie z.B. Salze von Fettaminen, Fettaminoxethylaten sowie quaternäre Alkylammoniumverbindungen eingesetzt.

Natürlich können in den wäßrigen Dispersionen auch übliche Schutzkolloide mitverwendet werden, und zwar bevorzugt solche auf der Basis von hochmolekularen, HO-, $(R)_2N$-, $(R)_3{}^{(+)}N$-, HOOC- oder ROOC-Gruppen tragenden organischen Verbindungen, wobei R z.B. vorzugsweise einen aliphatischen Rest mit 1 bis 8 C-Atomen bedeuten kann, die wasserlöslich oder wasserdispergierbar sind, dabei im wesentlichen keine oder keine ausgeprägte Grenzflächenaktivität entfalten und ein ausgeprägtes Dispergiervermögen besitzen. Bevorzugte Schutzkolloide sind solche von nichtionogener Struktur, wie z.B. Zellulosäther, Polyvinylalkohole, Polysaccharide, Polyvinylpyrrolidone, wobei diese Verbindungen durch Amminogruppen, quaternäre Ammoniumgruppen, Carboxyl- bzw. Carboxylatgruppen sowie Carboxyalkylgruppen (Estergruppen) substituiert sein können.

Die Konzentration solcher Hilfsmittel kann bei Emulgatoren vorzugsweise 0 bis 20 Gew.-%, insbesondere 0,1 bis 7 Gew.-%, und bei Schutzkolloiden vorzugsweise 0 bis 5 Gew.-%, insbesondere 0,1 bis 2 Gew.-%, jeweils bezogen auf das Dispersionspolymerisat, betragen.

Die Herstellung erfindungsgemäßer Dispersionspolymerisate kann bevorzugt nach bekannten Verfahren der radikalisch initiierten Emulsionspolymerisation (Batch-, Voremulsions- oder Dosierverfahren), vorzugsweise unter Mitverwendung von Emulgatoren, Schutzkolloiden, Dispergiermitteln, Molekulargewichtsreglern und pH-Wert-Regulatoren, erfolgen, wobei wäßrige Dispersionen mit Gehalten an Disperionspolymerisatfeststoff von vorzugsweise 10 bis 75 Gew.-%, insbesondere 30 bis 60 Gew.-%, bezogen auf die wäßrige Dispersion, erhalten werden können. Die Einstellung von niedrigeren oder höheren Feststoffgehalten in den Dispersionen ist nach üblichen Methoden möglich. Der pH-Wert der wäßrigen Dispersionen liegt üblicherweise im Bereich von 3 bis 9, vorzugsweise 4 bis 8,5. Auch die Isolierung der Dispersionspolymerisate, z.B. in Pulverform, ist aus den Dispersionen nach üblichen Methoden möglich, vorzugsweise z.B. durch Sprühtrocknung oder durch Vermischen der Dispersion mit flüssigen Fällungsmitteln nach üblichen Methoden.

Als Lösungsmittel für wasserfreie, erfindungsgemäße Dispersionspolymerisate kommen z.B. aliphatische und vorzugsweise aromatische Kohlenwasserstoffe, höhere Alkanole, Äther mit höheren Alkylresten sowie cyclische Äther, wie z.B. Tetrahydrofuran und Dioxan, ferner Ketone sowie Ester infrage.

Es ist prinzipiell auch möglich, Polymerisate vom Typ der erfindungsgemäßen Dispersionspolymerisate z.B. durch radikalisch initiierte Lösungspolymerisation in organischen Lösungsmitteln herzustellen und die resultierenden organischen Polymerisatlösungen unter Emulgatorzusatz in Wasser zu emulgieren, anschließend das organische Lösungsmittel abzudestillieren und dadurch zu wäßrigen Polymerisatdispersionen zu gelangen. Dieser Weg ist jedoch aufwendig und gegebenenfalls umweltbelastend, im Gegensatz zu der bevorzugten Emulsions-, Suspensions- oder Perl-Polymerisation in wäßrigem Medium.

Bei der Emulsionspolymerisation zur Herstellung erfindungsgemäßer Dispersionspolymerisate wird üblicherweise und vorzugsweise so verfahren, daß man in einem üblichen Polymerisationsreaktor einen Teil des oder der zu verwendenden Monomeren entweder allein oder im Gemisch mit anderen bekannten und copolymerisationsfähigen Monomeren in der wäßrigen Phase vorlegt, die Polymerisation durch radikalische Initiierung startet und das restliche Monomere bzw. Monomerengemisch unter Rühren und Aufrechterhaltung der benötigten Polymerisationstemperatur im Bereich von 20 bis 100 °C, vorzugsweise 40 bis 90 °C, gegebenenfalls in voremulgierter Form, innerhalb von 1 bis 8 Stunden in den Polymerisationsreaktor eindosiert. In manchen Fällen kann es auch vorteilhaft sein, daß man die gesamte Monomerenmenge und die wäßrige Phase in dem Polymerisationsreaktor vorlegt und die Polymerisationsreaktion in der Form eines Batchansatzes durchführt.

Zur Initiierung der Emulsionscopolymerisation werden vorzugsweise übliche, Radikalketten startende, wasserlösliche Initiatoren in Mengen von 0,01 bis 2 Gew.-%, bezogen auf die Gesamtmonomerenmenge, eingesetzt. Beispiele dazu sind u.a. Alkali- oder Ammoniumpersulfat, aber auch $H_2O_2$, tert.-Butylhydroperoxid sowie 4,4'-Azobis(4-cyanovaleriansäure), 2,2'-Azobis-(N,N'dimethylenisobutyramidin)-dihydrochlorid, 2,2'-Azobis-2(2-amidinopropan)dihydrochlorid. Die letzteren beiden Initiatoren sind insbesondere bei der Herstellung überwiegend kationisch geladener Copolymerisate geeignet. Möglich sind auch energiereiche Strahlen und übliche Photoinitiatoren.

Bevorzugtes Einsatzgebiet für die erfindungsgemäßen Polymerisate bzw. Copolymerisate ist ihre Verwendung als Beschichtungsmasse für feste Substrate, insbesondere als antikorrosive Beschichtung auf Eisen und Stahl, als Ausgangsmaterial für die Herstellung von Filmen, Folien, Fasern, Klebstoffen, Lacken, Pressmassen und Formkörpern, als Verdicker in wäßrigen Zubereitungen, als Imprägniermittel für poröse Substrate, als Bindemittel für Farben, Putze, Keramikschlicker sowie zur Herstellung von Textil- und Lederimprägniermitteln, zur Faserlederherstellung, als Bindemittel bei der Papierherstellung, der Papierveredlung sowie in der Bauindustrie bei der Herstellung von Beton und Mörtel.

Die Erfindung wird durch die nachfolgenden Beispiele näher erläutert, ohne sie dadurch zu beschränken.

Beispiel 1

Herstellung eines Emulsionscopolymerisats mit der monomeren, fluorhaltigen Formel I-Urethanverbindung

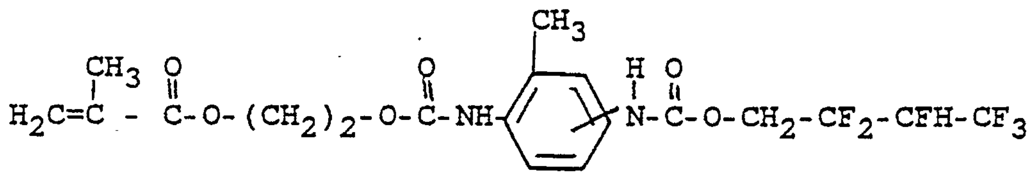

In einem (2 l)-Dreihalskolben mit Rührer, Rückflußkühler und Innenthermometer werden 1,88 g des Na-Salzes eines Alkylpolyglykoläthersulfates (Emulgator) in 206,9 g entsalztem Wasser (= E-Wasser) gelöst und vorgelegt. Aus 243,7 g E-Wasser, 3,75 g Alkylpolyglykoläthersulfat-Na-Salz, 206,5 g Butylacrylat (BuA) und 168,75 g Methylmethacrylat (MMA), 18,75 g der oben angegebenen monomeren fluorhaltigen Formel I-Urethanverbindung (= 5 Gew.-%, bezogen auf die Hauptmonomerenmenge aus BuA und MMA), 7,5 g Methacrylsäure, 3,75 g Acrylsäure und 1,97 g Ammoniumpersulfat (APS) wird eine Emulsion hergestellt. 15 g dieser Emulsion werden in die vorgelegte wäßrige Emulgatorlösung gegeben und die Vorlage unter Rühren auf 80° C erwärmt. Durch Zugabe von 0,175 g APS, gelöst in 10 g E-Wasser, in die Vorlage wird die Polymerisation bei 50 bis 55° C gestartet und bei 80° C unter Rühren die restliche Monomeremulsion innerhalb von 3,5 Stunden zudosiert. Nach einer Nachreaktionsphase von 2,5 Stunden bei 80° C wird die entstandene Copolymerisatdispersion auf Raumtemperatur (RT) abgekühlt und durch Zugabe von wäßrigem Ammoniak auf pH 8,5 eingestellt. Man erhält eine Dispersion mit einem Feststoffgehalt von 45 Gew.-%, die eine minimale Filmbildungstemperatur (MFT) von 10° C besitzt. Der Fluorgehalt des Copolymerisats beträgt 1,8 Gew.-%, bezogen auf das Copolymerisat. Die mittlere Teilchengröße der Dispersion beträgt 139 nm (Gewichtsmittel).

Beispiel 2

Herstellung eines Emulsionscopolymerisats mit der comonomeren, fluorhaltigen Formel I-Urethanverbindung

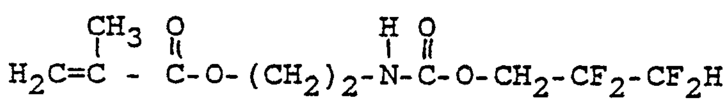

In einer (2 l)-Rührapparatur wie in Beispiel 1 beschrieben wird eine Lösung aus 1,5 g eines Nonylphenolpolyglykoläthers und 0,75 g des Ammoniumsalzes eines sulfatierten Ethylenoxid-Propylenoxid-Blockcopolymerisats in 250 g E-Wasser vorgelegt. Aus 129,2 g E-Wasser, 11,7 g Nonylphenolpolyglykoläther, 6,8 g Ammoniumsalz eines sulfatierten Ethylenoxid-Propylenoxid-Blockcopolymerisats, 193,6 g Styrol, 202,4 g Oktylacrylat (OA), 44 g der oben angegebenen monomeren fluorhaltigen Formel I-Urethanverbindung (= 11,1 Gew.-%, bezogen auf die Hauptmonomerenmenge aus Styrol und OA), 8,8 g Methacrylsäure und 4,4 g Acrylsäure wird eine Emulsion hergestellt. 12 g dieser Emulsion werden in die vorgelegte wäßrige Emulgatorlösung gegeben und die Vorlage unter Rühren auf 82° C erwärmt. Durch Zugabe von 0,31 g APS, gelöst in 2,6 g E-Wasser, in die Vorlage wird die Polymerisation bei 82° C gestartet und 15 Minuten danach werden bei 82° C unter Rühren die restliche Monomeremulsion und parallel dazu 0,57 g APS, gelöst in 17 g E-Wasser, innerhalb von 4 Stunden zudosiert. Nach dem Dosier-Ende werden weitere 0,13 g APS, gelöst in 2,6 g E-Wasser, zugegeben und das Reaktionsgemisch 3 Stunden bei 82° C nachreagieren lassen.

Die entstandene Copolymerisatdispersion wird auf RT abgekühlt und durch Zugabe von wäßrigem Ammoniak auf pH 8 eingestellt. Man erhält einen feinteiligen Latex mit einem Feststoffgehalt von 49,4 Gew.-% und einer MFT von 11° C.

Die mittlere Teilchengröße beträgt 77 nm (Gewichtsmittel). Der Fluorgehalt des Copolymerisats beträgt 2,65 Gew.-%, bezogen auf das Copolymerisat.

Beispiel 3

Beispiel 1 wird wiederholt mit der Abänderung, daß die Hauptmonomeren MMA und BuA im Gewichtsverhältnis von 40:55 eingesetzt werden und als comonomeres, fluorhaltiges Formel I-Urethanderivat die Verbindung

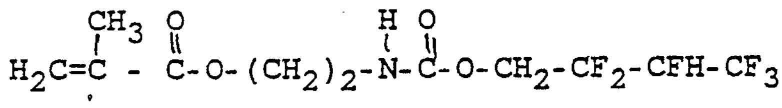

in einer Menge von 10 Gew.-%, bezogen auf die Hauptmonomerenmenge aus MMA und BuA, verwendet wird. Die resultierende und auf pH 8,5 eingestellte Copolymerisatdispersion besitzt einen Feststoffgehalt von 46,1 Gew.-%, die MFT beträgt 0 °C, die mittlere Teilchengröße 88 nm und der Fluorgehalt des Copolymerisats 3,4 Gew.-%, bezogen auf das Copolymerisat.

**Beispiel 4**

Beispiel 1 wird wiederholt mit der Abänderung, daß die Hauptmonomeren MMA und BuA im Gewichtsverhältnis von 40:55 eingesetzt werden und als comonomeres, fluorhaltiges Formel I-Urethanderivat die Verbindung

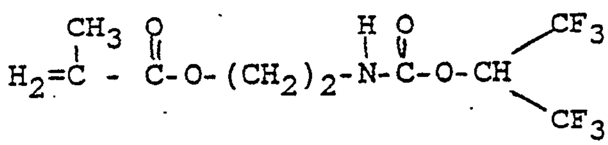

in einer Menge von 10 Gew.-%, bezogen auf die Hauptmonomerenmenge aus MMA und BuA, verwendet wird. Die resultierende und auf pH 8,5 eingestellte Copolymerisatdispersion besitzt einen Feststoffgehalt von 45,7 Gew.-%, die MFT beträgt 4 °C, die mittlere Teilchengröße 92 nm und der Fluorgehalt des Copolymerisats 3,5 Gew.-%, bezogen auf das Copolymerisat.

**Beispiel 5**

Beispiel 2 wird wiederholt mit der Abänderung, daß die Hauptmonomeren Styrol und OA im Gewichtsverhältnis von 49:46 eingesetzt werden und das comonomere, fluorhaltige Formel I-Urethanderivat in einer Menge von 5 Gew.-%, bezogen auf die Hauptmonomerenmenge aus Styrol und OA, verwendet wird. Die resultierende und auf pH 8 eingestellte Copolymerisatdispersion besitzt einen Feststoffgehalt von 49,2 Gew.-%, die MFT beträgt 11 °C, die mittlere Teilchengröße 143 nm und der Fluorgehalt des Copolymerisats 1,3 Gew.-%, bezogen auf das Copolymerisat.

**Beispiel 6**

Beispiel 2 wird wiederholt mit der Abänderung, daß die Hauptmonomeren Styrol und OA im Gewichtsverhältnis von 44:46 eingesetzt werden und als comonomeres, fluorhaltiges Formel I-Urethanderivat die Verbindung

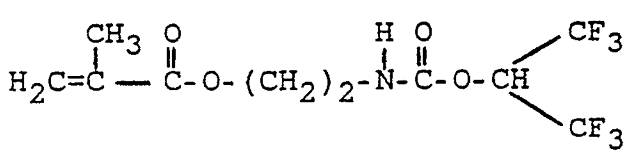

in einer Menge von 10 Gew.-%, bezogen auf die Hauptmonomerenmenge aus Styrol und OA, verwendet wird. Die resultierende und auf pH 8 eingestellte Copolymerisatdispersion besitzt einen Feststoffgehalt von 49 Gew.-%, die MFT beträgt 16 °C, die mittlere Teilchengröße 141 nm und der Fluorgehalt des Copolymerisats 3,5 Gew.-%, bezogen auf das Copolymerisat.

**Vergleichsbeispiel 1**

Beispiel 1 wird wiederholt mit der Abänderung, daß kein comonomeres, fluorhaltiges Formel I-Urethanderivat verwendet wird und die Hauptmonomeren MMA und BuA im Gewichtsverhältnis von 52:48 eingesetzt werden. Die resultierende und auf pH 8,5 eingestellte Copolymerisatdispersion, die fluorfrei ist, besitzt einen Feststoffgehalt von 46 Gew.-%, die MFT beträgt 18 °C und die mittlere Teilchengröße 88 nm.

**Vergleichsbeispiel 2**

Beispiel 2 wird wiederholt mit der Abänderung, daß kein comonomeres, fluorhaltiges Formel I-Urethanderivat verwendet wird und die Hauptmonomeren Styrol und OA im Gewichtsverhältnis von 54:46 eingesetzt werden. Die resultierende und auf pH 8 eingestellte Copolymerisatdispersion, die fluorfrei ist, besitzt einen Feststoffgehalt von 50 Gew.-%, die MFT beträgt 15 °C und die mittlere Teilchengröße 144 nm.

**Beispiel 7**

**Anwendungsprüfungen**

Die Polymerisate werden in wäßriger Dispersionsform als Klarlack geprüft. Dazu werden die Dispersionen der Beispiele 1 und 3 sowie der Vergleichsbeispiele 1 und 2 jeweils als solche mit einer 75 µm Rakel auf die Oberflächen von entfetteten, phosphatierten (= decarpierten) Stahlblechen beidseitig aufgezogen und nach erfolgter Eilmbildung 14 Tage bei Raumtemperatur an der Luft nachgetrocknet, wobei auf den Prüfblechen jeweils ein ca. 35 µm dicker, festhaftender Klarlackfilm resultiert. Die solchermaßen beschichteten Prüfbleche werden anschließend einem Salzsprühtest nach DIN 53167 unterworfen, um die Korrosionsschutzwirkung der Dispersionspolymerisatfilme auf das Stahlblech zu prüfen. Das Ergebnis ist in der Tabelle 1 zusammengefaßt wiedergegeben und zeigt das experimentell ermittelte Korrosionsverhalten der beschichteten Stahlprüfkörper und die überraschend gute korrosionsschützende Wirkung der Klarlacke aus den erfindungsgemäßen Dispersionspolymerisaten der Beispiele 1 und 3, vergleichsweise zum Ergebnis mit den Klarlacken aus üblichen Dispersionspolymerisaten der Vergleichsbeispiele 1 und 2. Gemäß den letzteren beiden Versuchsergebnissen waren die Stahlprüfkörper nach 240 Stunden Salzsprüheinwirkung durch Rost stark angegriffen, während bei den mit erfindungsgemäßen Klarlacken der Beispiele 1 und 3 beschichteten Prüfkörpern nach 240 Stunden Salzsprüheinwirkung deutlich geringere Korrosionserscheinungen beobachtet werden konnten.

Tabelle 1

Korrosionsverhalten von beidseitig mit Klarlackfilmen (ca. 35 µm dick) beschichteten Stahlprüfblechen im Salzsprühtest nach DIN 53167.

| Salzsprüh-testdauer (Stunden) | Korrosionsbewertungszahlen von 0 bis 5 (0 = keine Korrosion, 5 = sehr starke Korrosion) KBM=Korrosions-blasenmenge KBG=Korrosions-blasengröße R = Rost | Korrosionsbewertungszahlen an Stahlprüfblechen mit Klarlackfilmen aus: Beisp. 1 | Beisp. 3 | Vergl.-Beisp. 1 | Vergl.-Beisp. 2 |
|---|---|---|---|---|---|
| 240 | KBM | 2 | 2,5 | 3 | 4 |
| | KBG | 3 | 3 | 5 | 5 |
| | R | 2 | 2 | 4 | 4 |

**Beispiel 8**

**Anwendungsprüfungen**

Die Polymerisate werden in wäßriger Dispersionsform als Klarlack geprüft. Dazu werden die Dispersionen der Beispiele 1 und 3 und der Vergleichsbeispiele 1 und 2 jeweils als solche mit einer 75 µm Rakel auf die Oberflächen von entfetteten, phosphatierten (= decarpierten) Stahlblechen beidseitig aufgezogen und nach erfolgter Filmbildung 14 Tage bei Raumtemperatur an der Luft nachgetrocknet, wobei auf den Stahlprüfblechen jeweils ein ca. 35 µm dicker, festhaftender Klarlackfilm resultiert. Die solchermaßen beschichteten Prüfbleche werden anschließend einem Wasserlagerungstest in destilliertem Wasser bei Raumtemperatur unterworfen, um die Korrosionsschutzwirkung der Dispersionspolymerisatfilme auf das Stahlblech zu prüfen. Das Ergebnis ist in der Tabelle 2 zusammengefaßt wiedergegeben und zeigt das experimentell ermittelte Korrosionsverhalten der beschichteten Stahlprüfkörper und die überraschend gute korrosionsschützende Wirkung des Klarlacks aus erfindungsgemäßen Dispersionspolymerisaten der Beispiele 2 und 3, vergleichsweise zum Ergebnis mit den Klarlacken aus Dispersionspolymerisaten der Vergleichsbeispiele 1 und 2, deren Makromoleküle keine fluorhaltige Urethangruppen tragenden Monomereinheiten enthalten.

Tabelle 2

Korrosionsverhalten von beidseitig mit Klarlackfilmen (ca. 35 µm dick) beschichteten Stahlprüfblechen in destilliertem Wasser bei 20°C.

| Lagerungs-dauer (Stunden) in dest. $H_2O$ bei 20°C | Korrosionsbewertungszahlen von 0 bis 5 (0 = keine Korrosion, 5 = sehr starke Korrosion) | | | | |
|---|---|---|---|---|---|
| | KBM=Korrosions-blasenmenge KBG=Korrosions-blasengröße R = Rost | Korrosionsbewertungszahlen an Stahlprüfblechen mit Klarlackfilmen aus: | | | |
| | | Beisp. 1 | Beisp. 3 | Vergl.-Beisp. 1 | Vergl.-Beisp. 2 |
| 120 | KBM | 0,5 | 0,5 | 1 | 2 |
| | KBG | 0,5 | 0,5 | 2 | 1 |
| | R | 0 | 0 | 1 | 2 |

Gemäß den Versuchsergebnissen mit den Klarlackfilmen der vergleichsbeispiele 1 und 2 war die Oberfläche der Stahlprüfkörper nach 120 Stunden Wassereinwirkung durch Rost deutlich angegriffen, während bei den mit erfindungsgemäßen Klarlacken der Beispiele 1 und 3 beschichteten Prüfkörpern nach 120 Stunden Wassereinwirkung die Oberfläche der Stahlprüfkörper praktisch keine Korrosionserscheinungen zeigten.

**Beispiel 9**

**Anwendungsprüfungen**

Die Polymerisate werden in wäßriger Dispersionsform als Lederimprägniermittel auf ihre hydrophobierende und oleophobierende Wirkung geprüft. Der Test wird nach der in der EP-PS 225826 beschriebenen Methode durchgeführt und es werden die Dispersionen der Beispiele 1 bis 4 und der Vergleichsbeispiele 1 und 2 verwendet. Dazu werden die Dispersionen der Beispiele 1 bis 4 mit Wasser soweit verdünnt, daß ihr Fluorgehalt, jeweils bezogen auf die verdünnte Dispersion, etwa 0,08 Gew.-% beträgt. Die Dispersionen der Vergleichsbeispiele 1 und 2 werden in analoger Weise mit Wasser auf vergleichbare Feststoffgehalte verdünnt. Die Prüfungen werden wie folgt durchgeführt:

8 x 2 cm große Wildlederstücke werden in die oben beschriebenen wäßrigen Verdünnungen der Dispersionen getaucht und anschließend 24 Stunden bei Raumtemperatur getrocknet. Als Blindwert wird eine Probe in E-Wasser getaucht und ebenfalls getrocknet. Auf die solchermaßen ausgerüsteten Wildlederproben werden sodann in horizontaler Lage bei Raumtemperatur einzelne Wassertropfen bzw. einzelne Öltropfen aufgegeben und die Eindringzeit der Tropfen in das Leder ermittelt. Die Ergebnisse sind in der Tabelle 3 zusammengefaßt wiedergegeben.

Tabelle 3

Hydrophobierende bzw. oleophobierende Wirkung der Polymerisate auf Leder

| Polymerisat aus | Eindringzeit eines Wassertropfens | Eindringzeit eines Öltropfens |
|---|---|---|
| Beisp. 1 | 6 Min. | 1440 Min. |
| Beisp. 2 | 16 Min. | 100 Min. |
| Beisp. 3 | 34 Min. | 1440 Min. |
| Beisp. 4 | 38 Min. | 200 Min. |
| Vergl.-Beisp. 1 | 26 Sek. | 1 Min. |
| Vergl.-Beisp. 2 | 6 Min. | 7 Min. |
| Blindwert | 20 Sek. | 1 Min. |

Wie die Ergebnisse in Tabelle 3 zeigen, sind die fluorhaltige Urethangruppen enthaltenen erfindungsgemäßen Polymerisate den vergleichbaren fluorfreien Polymerisaten aus den Vergleichsbeispielen 1 und 2 sowie dem Blindwert deutlich überlegen.

**Patentansprüche**

**1.** Polymerisate auf der Basis von ethylenisch ungesättigten Monomeren, die Einheiten aus ethylenisch ungesättigten, fluorhaltigen Urethanderivaten enthalten und durch Emulsions-, Suspensions-, Perl-, Lösungs-, Block- oder Fällungs-Polymerisation bzw. -Copolymerisation hergestellt worden sind, dadurch gekennzeichnet, daß sie mindestens 0,1 Gew.-%, bezogen auf das Polymerisat bzw. Copolymerisat, Monomereinheiten aus ethylenisch ungesättigten, fluorhaltigen Urethanderivaten der Formel 1,

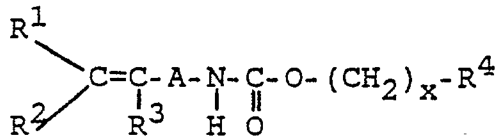

(I) ·

worin $R^1$ bis $R^4$, A und der Zahlenindex x folgendes bedeuten:

| | |
|---|---|
| $R^1$, $R^2$, $R^3$, | die gleich oder verschieden sein können, = H, $-CH_3$, vorzugsweise $R^1$, $R^2$ = H und $R^3$ = $-CH_3$, |
| x | = 1 oder 2 |
| A | = $(CH_2)_y$- , y = 1 bis 6, tert.-Butylphenylen $-[C_6H_3-C(CH_3)_3]$- oder $-C_6H_4C(CH_3)_2$- oder 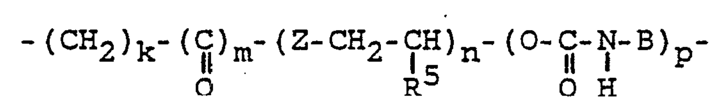 |
| Z | = Sauerstoff oder NH, vorzugsweise Sauerstoff, |
| $R^5$ | = H, $-CH_3$, $-C_2H_5$, |
| B | = $(C_6-C_{16})$-Arylen, das $(C_1-C_{10})$-Alkylreste enthalten kann, vorzugsweise Phenylen, Toluylen, tert.-Butylphenylen, Naphthylen, $(c_2-c_{12})$-Alkylen oder $(C_6-C_{10})$-Cycloalkylen, |
| k, m, p | = 0 oder 1, vorzugsweise m = 1, |
| n | = 1 bis 5, vorzugsweise 1, |
| $R^4$ | = $(C_2F_4)_qH$, $-(CF_2)_rH$, $(C_rF_{2r+l})$, $-C_rF_{2r}-O-R^6$, |
| q | = 1 bis 6, vorzugsweise 1 bis 3, |
| r | = 1 bis 9, vorzugsweise 1 bis 6, |
| $R^6$ | = $(C_1-C_{12})$-Alkyl, das teilweise oder vollständig durch Fluoratome substituiert sein kann, $(C_6-C_{12})$-Aryl oder $(C_7-C_{12})$-Alkaryl, die teilweise oder vollständig durch Fluoratome substituiert sein können, |

enthalten, oder wäßrige Dispersionen dieser Polymerisate bzw. Copolymerisate.

**2.** Polymerisate nach Anspruch 1, dadurch gekennzeichnet, daß sie 0,2 bis 100 Gew.-% Monomereinheiten aus Verbindungen der Formel I enthalten und durch Perl- oder Emulsionspolymerisation hergestellt worden sind.

**3.** Polymerisate nach Anspruch 1 oder 2, dadurch gekennzeichnet, daß ihr Fluorgehalt mindestens 0,1 Gew.-%, bezogen auf das Polymerisat bzw. Copolymerisat, beträgt.

**4.** Polymerisate nach einem oder mehreren der Ansprüche 1 bis 3, dadurch gekennzeichnet, daß ihr Fluorgehalt 0,1 bis 10 Gew.-%, bezogen auf das Polymerisat bzw. Copolymerisat, beträgt.

**5.** Polymerisate nach einem oder mehreren der Ansprüche 1 bis 4, dadurch gekennzeichnet, daß sie außer den Monomereinheiten der Formel I bis zu 99,9 Gew.-% bzw. bis zu 99,8 Gew.-% Comonomereinheiten aus der Gruppe üblicher copolymerisationsfähiger Vinylester, Methacrylester, Acrylester, Vinylaromaten, Acrylnitril, Methacrylnitril, Ethylen, Vinylidenchlorid, Vinylchlorid, Mono- oder Di-Ester von Crotonsäure, Maleinsäure, Fumarsäure, Itakonsäure mit $(C_1-C_{22})$-Alkoholen enthalten.

**6.** Polymerisate nach einem oder mehreren der Ansprüche 1 bis 5, dadurch gekennzeichnet, daß sie 0 bis 99,9 Gew.-% bzw. bis 99,8 Gew.-% Comonomereinheiten aus copolymerisationsfähigen ethylenisch ungesättigten Monomeren mit funktionellen Resten aus der Gruppe -OH, $-SO_3H$ bzw. deren Salzen, -N-

$(R^5)_2$, $-N(R^6)_3$, -COOH bzw. deren Salzen, $-CON(R^7)_2$, $-N(R^5)-CO-NR^5R^6$, $-Si(OR^6)_3$, -PO(OH) oder Epoxid, wobei $R^5$ = $(C_1-C_6)$-Alkyl oder H, $R^6$ = $(C_1-C_{18})$-Alkyl, $(C_7-C_{22})$-Aralkyl, Glycidyl, H, $(C_1-C_4)$-Hydroxyalkyl, $(C_1-C_6)$-Carboxyalkyl und $R^7$ = $(C_1-C_6)$-Alkyl, H, Methylol, $(C_1-C_4)$-Alkoxy, $(C_2-C_6)$-Alkylsulfonsäure bzw. deren Salze bedeutet, enthalten.

**7.** Polymerisate nach einem oder mehreren der Ansprüche 1 bis 6, dadurch gekennzeichnet, daß sie in Form von wäßrigen Dispersionen vorliegen, deren minimale Filmbildungstemperatur (MFT) im Bereich von 0 bis 80 °C liegt.

**8.** Verfahren zur Herstellung von Polymerisaten nach einem oder mehreren der Ansprüche 1 bis 6 aus den sie aufbauenden monomeren, ethylenisch ungesättigten Verbindungen, dadurch gekennzeichnet, daß man die Ausgangsmonomeren in den erforderlichen Mengen nach einer Methode der Emulsions-, Suspensions-, Perl-, Lösungs-, Block- oder Fällungs-, vorzugsweise der Emulsions-Polymerisation bzw. -Copolymerisation radikalisch polymerisiert bzw. copolymerisiert und das Polymerisat gewinnt.

**9.** Verwendung der Polymerisate nach einem oder mehreren der Ansprüche 1 bis 7 bzw. hergestellt nach Anspruch 8 als Beschichtungsmasse für feste Substrate, als Ausgangsmaterial für die Herstellung von Filmen, Folien, Fasern, Klebstoffen, Lacken, Pressmassen und Formkörpern, als Verdicker in wäßrigen Zubereitungen, als Imprägniermittel für poröse Substrate, als Bindemittel für Farben, Putze, Keramikschlicker sowie zur Herstellung von Textil- und Lederimprägniermitteln, zur Faserlederherstellung, als Bindemittel bei der Papierherstellung, der Papierveredlung, in der Bauindustrie bei der Herstellung von Beton und Mörtel.

**Patentansprüche für folgenden Vertragsstaat: ES**

**1.** Verfahren zur Herstellung von Polymerisaten bzw. Copolymerisaten auf der Basis von ethylenisch ungesättigten Monomeren oder wäßrigen Dispersionen dieser Polymerisate bzw. Copolymerisate, die Einheiten aus ethylenisch ungesättigten, fluorhaltigen Urethanderivaten enthalten, durch radikalisch initiierte Emulsions-, Suspensions-, Perl-, Lösungs-, Block- oder Fällungs-Polymerisation bzw. -Copolymerisation aus den sie aufbauenden monomeren, ethylenisch ungesättigten Verbindungen, dadurch gekennzeichnet, daß man mindestens 0,1 Gew.-%, bezogen auf das Polymerisat bzw. Copolymerisat, Monomere aus ethylenisch ungesättigten, fluorhaltigen Urethanderivaten der Formel I einsetzt,

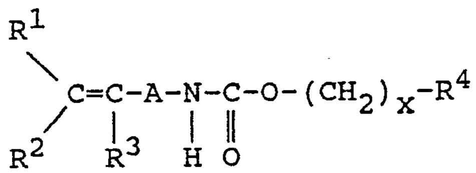

(I)

wobei in Formel I $R^1$ bis $R^4$, A und der Zahlenindex x folgendes bedeuten:

| | |
|---|---|
| $R^1$, $R^2$, $R^3$, | die gleich oder verschieden sein können, |
| | = H, $-CH_3$, vorzugsweise $R^1$, $R^2$ = H und $R^3$ = $CH_3$, |
| x | = 1 oder 2 |
| A | = $-(CH_2)_y-$, y = 1 bis 6, tert. Butylphenylen $-[C_6H_3-C(CH_3)_3]-$oder $-C_6H_4C(CH_3)_2-$ |

oder 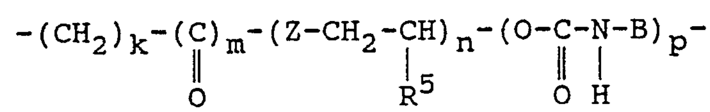

| | |
|---|---|
| Z | = Sauerstoff oder NH, vorzugsweise Sauerstoff, |
| $R^5$ | = H, $-CH_3$, $-C_2H_5$, |
| B | = $(C_6-C_{16})$-Arylen, das $(C_1-C_{10})$-Alkylreste enthalten kann, vorzugsweise Phenylen, Toluylen, tert.-Butylphenylen, Naphthylen, $(C_2-C_{12})$-Alkylen oder $(C_6-C_{10})$-Cycloalkylen, |
| k, m, p | = O oder 1, vorzugsweise m = 1, |

| | |
|---|---|
| n | = 1 bis 5, vorzugsweise 1, |
| $R^4$ | = $-(C_2F_4)_qH$, $-(CF_2)_rH$, $-(C_rF_{2r+1})$, $-C_rF_{2r}-O-R^6$, |
| q | = 1 bis 6, vorzugsweise 1 bis 3, |
| r | = 1 bis 9, vorzugsweise 1 bis 6, |
| $R^6$ | = $(C_1-C_{12})$-Alkyl, das teilweise oder vollständig durch Fluoratome substituiert sein kann, $(C_6-C_{12})$-Aryl oder $(C_7-C_{12})$-Alkaryl, die teilweise oder vollständig durch Fluoratome substituiert sein können. |

**2.** Verfahren nach Anspruch 1, dadurch gekennzeichnet, daß 0,2 bis 100 Gew.-% Monomere aus Verbindungen der Formel I eingesetzt werden und die Polymerisation bzw. Copolymerisation als Perl- oder Emulsionspolymerisation durchgeführt wird.

**3.** Verfahren nach Anspruch 1 oder 2, dadurch gekennzeichnet, daß der Fluorgehalt der Polymerisate bzw. Copolymerisate mindestens 0,1 Gew.-%, bezogen auf das Polymerisat bzw. Copolymerisat, beträgt.

**4.** Verfahren nach einem oder mehreren der Ansprüche 1 bis 3, dadurch gekennzeichnet, daß der Fluorgehalt der Polymerisate bzw. Copolymerisate 0,1 bis 10 Gew.-%, bezogen auf das Polymerisat bzw. Copolymerisat, beträgt.

**5.** Verfahren nach einem oder mehreren der Ansprüche 1 bis 4, dadurch gekennzeichnet, daß zur Copolymerisation außer den Monomeren der Formel I bis zu 99,9 Gew.-% bzw. bis zu 99,8 Gew.-%, bezogen auf das Copolymerisat, Comonomere aus der Gruppe üblicher copolymerisationsfähiger Vinylester, Methacrylester, Acrylester, Vinylaromaten, Acrylnitril, Methacrylnitril, Ethylen, Vinylidenchlorid, Vinylchlorid, Mono- oder Di-Ester von Crotonsäure, Maleinsäure, Fumarsäure, Itakonsäure mit $(C_1-C_{22})$-Alkoholen eingesetzt werden.

**6.** Verfahren nach einem oder mehreren der Ansprüche 1 bis 5, dadurch gekennzeichnet, daß zur Polymerisation bzw. Copolymerisation 0 bis 99,9 Gew.-% bzw. bis 99,8 Gew.-%, bezogen auf das Polymerisat bzw. Copolymerisat, Comonomere aus copolymerisationsfähigen ethylenisch ungesättigten Monomeren mit funktionellen Resten aus der Gruppe -OH, $-SO_3H$ bzw. deren Salzen, $-N(R^5)_2$, $-N(R^6)_3$, - COOH bzw. deren Salzen, $-CON(R^7)_2$, $-N(R^5)-CO-NR^5R^6$, - $Si(OR^6)_3$, -PO(OH) oder Epoxid, wobei $R^5$ = $(C_1-C_6)$-Alkyl oder H, $R^6$ = $(C_1-C_{18})$-Alkyl, $(C_7-C_{22})$-Aralkyl, Glycidyl, H, $(C_1-C_4)$-Hydroxyalkyl, $(C_1-C_6)$-Carboxyalkyl und $R^7$ = $(C_1-C_6)$-Alkyl, H, Methylol, $(C_1-C_4)$-Alkoxy, $(C_2-C_6)$-Alkylsulfonsäure bzw. deren Salze bedeutet, eingesetzt werden.

**7.** Verfahren nach einem oder mehreren der Ansprüche 1 bis 6, dadurch gekennzeichnet, daß die Polymerisate bzw. Copolymerisate in Form von wäßrigen Dispersionen erhalten werden, deren minimale Filmbildungstemperatur (MFT) im Bereich von 0 bis 80 °C liegt.

**8.** Verwendung der Polymerisate bzw. Copoylmerisate, hergestellt nach einem oder mehreren der Ansprüche 1 bis 7, als Beschichtungsmasse für feste Substrate, als Ausgangsmaterial für die Herstellung von Filmen, Folien, Fasern, Klebstoffen, Lacken, Pressmassen und Formkörpern, als Verdicker in wäßrigen Zubereitungen, als Imprägniermittel für poröse Substrate, als Bindemittel für Farben, Putze, Keramikschlicker sowie zur Herstellung von Textil- und Lederimprägniermitteln, zur Faserlederherstellung, als Bindemittel bei der Papierherstellung, der Papierveredlung, in der Bauindustrie bei der Herstellung von Beton und Mörtel.